(19) Europäisches Patentamt
European Patent Office
Office européen des brevets

(11) **EP 3 769 153 B1**

(12) **FASCICULE DE BREVET EUROPEEN**

(45) Date de publication et mention de la délivrance du brevet:
**07.08.2024 Bulletin 2024/32**

(21) Numéro de dépôt: **19742816.2**

(22) Date de dépôt: **15.03.2019**

(51) Classification Internationale des Brevets (IPC):
**G02F 1/35** *(2006.01)*    **H01S 3/10** *(2006.01)*

(52) Classification Coopérative des Brevets (CPC):
**G01J 3/10; G02F 1/365**

(86) Numéro de dépôt international:
**PCT/FR2019/050581**

(87) Numéro de publication internationale:
**WO 2019/186022 (03.10.2019 Gazette 2019/40)**

(54) **PROCEDE ET DISPOSITIF DE TRANSFERT SPECTRAL POUR PRODUIRE UN SIGNAL OPTIQUE UTILE**

VERFAHREN UND VORRICHTUNG ZUR SPEKTRALEN ÜBERTRAGUNG ZUR ERZEUGUNG EINES NÜTZLICHEN OPTISCHEN SIGNALS

SPECTRAL TRANSFER METHOD AND DEVICE, FOR PRODUCING A USEFUL OPTICAL SIGNAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.03.2018 FR 1852478**

(43) Date de publication de la demande:
**27.01.2021 Bulletin 2021/04**

(73) Titulaire: **Université de Bourgogne**
**21000 Dijon (FR)**

(72) Inventeurs:
• **MILLOT, Guy**
  **21220 Chevannes (FR)**
• **PARRIAUX, Alexandre**
  **21000 Dijon (FR)**
• **HAMMANI, Kamal**
  **71880 CHATENOY-LE-ROYAL (FR)**

(74) Mandataire: **Plasseraud IP**
**66, rue de la Chaussée d'Antin**
**75440 Paris Cedex 09 (FR)**

(56) Documents cités:
**WO-A1-2014/102572    US-A1- 2012 133 931**

• **FATOME J. ET AL: "Observation of Optical Undular Bores in Multiple Four-Wave Mixing", PHYSICAL REVIEW X, vol. 4, no. 2, 1 May 2014 (2014-05-01), XP055948963, Retrieved from the Internet <URL:https://journals.aps.org/prx/pdf/10.1103/PhysRevX.4.021022> DOI: 10.1103/PhysRevX.4.021022**
• **GUY MILLOT ET AL: "Frequency-agile dual-comb spectroscopy", NATURE PHOTONICS, vol. 10, no. 1, 21 December 2015 (2015-12-21), UK, pages 27 - 30, XP055526158, ISSN: 1749-4885, DOI: 10.1038/nphoton.2015.250**
• **ZHAOWEI ZHANG ET AL: "Mid-infrared dual-comb spectroscopy with an optical parametric oscillator", OPTICS LETTERS, OPTICAL SOCIETY OF AMERICA, US, vol. 38, no. 16, 15 August 2013 (2013-08-15), pages 3148 - 3150, XP001583846, ISSN: 0146-9592, DOI: HTTP://DX.DOI.ORG/10.1364/OL.38.003148**
• **SCHILLER S: "SPECTROMETRY WITH FREQUENCY COMBS", OPTICS LETTERS, OPTICAL SOCIETY OF AMERICA, US, vol. 27, no. 9, 1 May 2002 (2002-05-01), pages 766 - 768, XP001116374, ISSN: 0146-9592**

**Description**

La présente invention concerne un procédé et un dispositif de transfert spectral pour produire un signal optique utile, ainsi qu'un spectrophotomètre qui met en oeuvre un tel procédé et un tel dispositif.

La spectrophotométrie par transformation de Fourier est très largement utilisée depuis de nombreuses années du fait du niveau de maîtrise qui a été atteint pour cette technique d'analyse, et pour le niveau de précision des analyses spectrales qui peuvent être obtenues ainsi. Toutefois, la spectrophotométrie par transformation de Fourier nécessite de faire varier une différence de longueur de trajet optique. Une telle variation est produite en mettant en oeuvre des composants optiques mobiles, ou en utilisant des composants optiques fixes qui présentent des formes complexes capables de produire un échantillonnage de la longueur d'un trajet optique.

Lorsque des composants optiques mobiles sont mis en oeuvre, le spectrophotomètre présente une fragilité qui est incompatible avec certaines applications ou certains environnements, par exemple en présence de vibrations. En outre, des dérives qui peuvent affecter dans le temps la position ou le contrôle de position de certains des composants optiques mobiles peuvent réduire la précision et l'exactitude des résultats de mesure. Enfin, le déplacement du (des) composant(s) optique(s) mobile(s) empêche de réduire en-deçà d'une limite instrumentale la durée d'acquisition qui est nécessaire pour obtenir un spectre d'analyse. Or une durée d'acquisition trop longue peut être incompatible avec un système à analyser qui évolue dans le temps. Autrement dit, une analyse en temps réel d'un système qui évolue assez rapidement n'est pas compatible avec l'utilisation d'un spectrophotomètre à transformation de Fourier qui possède des composants mobiles.

Par ailleurs, les composants optiques fixes qui sont capables de produire un échantillonnage de la longueur d'un trajet optique sont en général très onéreux, à cause de leurs formes complexes, et les paramètres de l'échantillonnage ne peuvent pas être variés entre des analyses spectrales successives. Pour cette raison, les spectrophotomètres qui utilisent de tels composants fixes pour produire l'échantillonnage sont en général dédiés chacun à une application identifiée, et ne sont pas adaptés pour effectuer chacun des analyses spectrophotométriques dans plusieurs domaines spectraux différents ni avec plusieurs résolutions spectrales différentes.

Pour pallier ces limitations, un nouveau procédé de spectrophotométrie, dit à deux peignes, ou «dual-comb» en anglais, a été proposé depuis quelques années, par exemple dans l'article intitulé «Spectrometry with frequency combs», de Schiller S., Optics Letters 27, 766 (2002), doi.org/10.1364/OL.27.000766. Dans ce nouveau procédé, un signal optique dont le spectre est composé d'une association de deux peignes est envoyé sur le système à analyser spectralement, et une partie de ce signal optique qui a traversé le système à analyser est détectée par une cellule photo-électrique. Cette partie de signal détectée contient des caractéristiques d'absorption optique du système, qui peuvent être calculées en appliquant une transformation de Fourier par rapport au temps, au signal de détection qui est délivré par la cellule photo-électrique. De tels procédés spectrophotométriques à deux peignes présentent les avantages de permettre des analyses spectrales très rapides, par exemple avec des durées d'acquisition par spectre qui sont inférieures à 10 ms (milliseconde), et de ne pas nécessiter de composants optiques mobiles.

Néanmoins, les spectrophotomètres à deux peignes nécessitent que le signal optique dont le spectre est l'association des deux peignes, et qui est envoyé à travers le système à analyser, présente une cohérence temporelle très élevée entre les deux peignes. L'utilisation d'un seul laser pour générer ce signal optique à deux peignes est avantageuse pour cela. Mais par ailleurs, le domaine spectral d'intérêt pour des analyses spectrophotométriques de gaz est essentiellement compris entre 1,8 $\mu$m (micromètre) et 10 $\mu$m, en valeurs de longueur d'onde du signal optique. Or les sources laser dans ce domaine spectral de 1,8 $\mu$m à 10 $\mu$m sont en général complexes et onéreuses, alors que des sources laser adaptées pour les bandes spectrales de télécommunication optique, c'est-à-dire dont la longueur d'onde d'émission laser est comprise entre 1,53 $\mu$m et 1,61 $\mu$m, sont disponibles à bas coût. En outre, certaines de ces sources laser pour télécommunication optique présentent des robustesses mécaniques très avantageuses, facilitant leur utilisation et les rendant compatibles avec de nombreux environnements, y compris en présence de vibrations.

Le document US 2012/0133931 A1 décrit une source laser qui produit un rayonnement dont le spectre possède une structure de peigne avec un grand écart entre composantes spectrales successives.

L'article intitulé «Frequency-agile dual-comb spectroscopy» de Guy Millot et al., Nature Photonics, Vol. 10, pp. 27-30, 2015, qui sera cité plus loin dans la présente description, décrit un analyseur spectroscopique à deux peignes de fréquences, qui est réalisable à partir de composants en fibres optiques.

L'article intitulé «Mid-infrared dual-comb spectroscopy with an optical parametric oscillator», de Zhaowei Zhang et al., Optics Letters, Vol. 38, N° 16, pp. 3148-3150, 2013, décrit une réalisation particulière d'analyseur spectroscopique à deux peignes de fréquences, qui utilise un oscillateur paramétrique.

Pour rappel, l'article intitulé «Spectrometry with frequency combs» de S. Schiller, Optics Letters, Vol. 27, N° 9, pp. 766-768, 2002, déjà cité plus haut, décrit le principe d'une analyse spectroscopique à deux peignes de fréquences.

Le document WO 2014/102572 A1 décrit un analyseur spectroscopique à peigne de fréquences.

Enfin, l'article intitulé «Observation of Optical Undular Bores in Multiple Four-wave Mixing» de J. Fatome et al., Physical Review X, Vol. 4, N° 2, 021022, 2014, décrit un comportement d'onde de choc qui résulte d'un mélange à quatre ondes.

Dans cette situation, il existe donc un besoin de produire des signaux optiques en forme de peigne à partir de sources laser à bas coût, en assurant que les signaux optiques en peigne qui sont produits soient situés dans un domaine spectral utile qui peut être compris entre 1,8 $\mu$m et 10 $\mu$m, et possèdent une cohérence temporelle qui soit élevée, voire très élevée.

Un objet annexe de l'invention est de proposer un tel procédé pouvant être mis en oeuvre avec des liaisons optiques qui sont au moins en partie à base de guides d'onde optiques. Avantageusement, un tel procédé est recherché qui ne nécessite aucune transmission optique non-guidée, c'est-à-dire aucune liaison optique à propagation d'onde en champ libre. En effet, l'utilisation de transmissions optiques entre composants qui soient guidées simplifie considérablement les procédures d'alignement entre ces composants.

De préférence, l'invention propose un tel procédé qui puisse être mis en oeuvre à partir d'au moins une fibre optique.

Pour cela, un premier aspect de l'invention propose un procédé de transfert spectral pour produire un signal optique utile qui possède un spectre en forme de peigne dans un intervalle spectral utile, à partir d'un signal optique de source qui possède un spectre de source aussi en forme de peigne mais dans un autre intervalle spectral, dit intervalle spectral de source et qui ne possède pas de recouvrement avec l'intervalle spectral utile. Ce procédé comprend d'injecter simultanément dans un guide d'onde optique non-linéaire le signal optique de source et un rayonnement laser, et de recueillir à une sortie du guide d'onde optique non-linéaire le signal optique utile tel que résultant d'un mélange à quatre ondes qui se produit entre le signal optique de source et le rayonnement laser lors de propagations simultanées du signal optique de source et du rayonnement laser dans le guide d'onde optique non-linéaire.

Selon l'invention, une fréquence du rayonnement laser est sélectionnée telle que l'intervalle spectral de source soit intermédiaire entre la fréquence du rayonnement laser et l'intervalle spectral utile, lorsque l'intervalle spectral de source et l'intervalle spectral utile sont exprimés en valeurs de fréquence. Ainsi, le signal optique de source a une fonction de source d'énergie, aussi appelée fonction de pompe dans le jargon de l'Homme du métier, pour une instabilité de modulation qui est effective pour ce même signal optique de source lors de sa propagation dans le guide d'onde optique non-linéaire. Une fonction du rayonnement laser, encore selon l'invention, est alors de stimuler l'instabilité de modulation qui est effective pour le signal optique de source. Le signal optique utile résulte alors du mélange à quatre ondes qui est produit par l'instabilité de modulation stimulée.

Dit autrement, le rayonnement laser sert à reproduire, dans une échelle spectrale, le signal optique de source sur un côté de l'intervalle spectral de source qui est à l'opposé du rayonnement laser, bien que cette reproduction de signal soit effectuée en général avec une intensité différente. Pour cette fonction du rayonnement laser, il est dit «IDLER» par les inventeurs.

Un avantage de la configuration de l'invention, selon laquelle l'intervalle spectral de source est intermédiaire entre la fréquence du rayonnement laser et l'intervalle spectral utile, réside dans l'excursion spectrale du signal optique utile lorsque l'intervalle spectral de source est varié par décalage. En effet, un décalage spectral du signal optique de source produit un décalage spectral pour le signal optique utile qui possède une longueur de décalage deux fois plus grande que celle du signal optique de source, lorsque la longueur d'onde du rayonnement laser reste constante. Pour une application spectrophotométrique, il est ainsi possible de parcourir un domaine spectral de mesure qui est large en adoptant un nombre réduit de valeurs successives pour une longueur d'onde de référence du signal optique de source.

C'est le signal optique de source qui fournit l'énergie du signal optique utile, selon une relation de conservation d'énergie à quatre ondes, et le rayonnement laser a pour fonction d'accroître - ou stimuler - une efficacité du mécanisme d'instabilité de modulation qui affecte le signal optique de source pour produire le signal optique utile. De cette façon, le signal optique utile peut avoir une intensité supérieure.

Dans les conditions de l'invention, le signal optique utile possède vraiment un spectre en forme de peigne et une cohérence temporelle élevée s'il est produit à partir d'un signal optique de source qui présente de telles caractéristiques. Autrement dit, le procédé permet de conférer ces caractéristiques au signal optique utile à partir du signal optique de source, par un effet de transfert de caractéristiques qui est lié au mécanisme d'instabilité de modulation.

La sélection de la fréquence du rayonnement laser, pour que l'intervalle spectral de source soit intermédiaire entre la fréquence du rayonnement laser et l'intervalle spectral utile, peut être effectuée en choisissant une source laser appropriée pour ce rayonnement laser, en fonction de la fréquence de rayonnement de cette source laser. Alternativement ou en combinaison, lorsqu'une source accordable de rayonnement laser est utilisée, la fréquence du rayonnement laser peut être sélectionnée par un ajustement approprié d'un paramètre de contrôle spectral de cette source laser accordable. Alternativement ou en combinaison encore, des méthodes de décalage de fréquence optique peuvent être appliquées au rayonnement laser pour en ajuster la fréquence.

Dans l'invention, l'instabilité de modulation qui est effective pour le signal optique de source lors de sa propagation dans le guide d'onde optique non-linéaire, résulte d'une interaction entre un effet Kerr et au moins un effet de dispersion. Dans des modes de mise en oeuvre de l'invention qui sont préférés, le guide d'onde optique non-linéaire peut être une fibre optique non-linéaire. Alternativement, le guide d'onde optique non-linéaire peut être d'un autre type, tel qu'un guide d'onde rectangulaire en silicium (Si), en dioxyde de titane ($TiO_2$), en nitrure de silicium (SiN), etc, ou des guides d'onde optiques non-linéaires d'autres types encore, sans limitation.

Selon une caractéristique supplémentaire de l'invention, des paramètres du guide d'onde optique non-linéaire sont sélectionnés pour qu'un coefficient d'un terme de dérivation d'ordre 4 par rapport au temps, qui existe dans une équation de propagation du guide d'onde optique non-linéaire, cette équation de propagation étant effective pour une enveloppe du signal optique de source, soit négatif, et pour qu'un coefficient d'un terme de dérivation d'ordre 2 par rapport au temps, qui existe aussi dans la même équation de propagation du guide d'onde optique non-linéaire effective pour l'enveloppe du signal optique de source, soit aussi négatif. De cette façon, l'instabilité de modulation qui est effective pour le signal optique de source est générée au moins en partie par ce terme de dérivation d'ordre 4. Le mélange à quatre ondes qui en résulte permet de produire le signal optique utile avec un écart spectral, mesuré à partir du signal optique de source, qui est supérieur. En particulier, il est possible de sélectionner ainsi les paramètres du guide d'onde optique non-linéaire en fonction d'un écart qui est voulu entre l'intervalle spectral utile et l'intervalle spectral de source. Notamment, il est ainsi possible d'obtenir un signal optique utile qui est situé dans un intervalle spectral utile compris entre 1,8 $\mu$m et 2,1 $\mu$m, à partir d'un signal optique de source qui est situé dans un intervalle spectral de source compris entre 1,5 $\mu$m et 1,6 $\mu$m, en utilisant un rayonnement laser de longueur d'onde 1,3 $\mu$m pour stimuler l'instabilité de modulation.

D'une façon avantageuse, les paramètres du guide d'onde optique non-linéaire peuvent être sélectionnés en outre de sorte qu'un coefficient d'un terme de dérivation d'ordre 2 par rapport au temps, qui existe en plus du terme de dérivation d'ordre 4 par rapport au temps dans l'équation de propagation du guide d'onde optique non-linéaire, ait un signe identique à celui du coefficient du terme d'ordre 4. De cette façon, le terme de dérivation temporelle d'ordre 2 ne génère pas d'instabilité de modulation supplémentaire qui serait aussi effective pour le signal optique de source. En effet, une telle instabilité de modulation supplémentaire produite par le terme de dérivation d'ordre 2 produirait un signal optique supplémentaire qui serait situé entre le signal optique de source et le signal optique utile tel que produit par le terme de dérivation d'ordre 4, sur une échelle spectrale. Or un tel signal optique supplémentaire à une position spectrale intermédiaire pourrait produire des interférences ou des superpositions de signaux non-désirées.

Avantageusement encore, au moins un variateur de polarisation peut être disposé pour ajuster l'une par rapport à l'autre des polarisations respectives du signal optique de source et du rayonnement laser, avant que le signal optique de source ou le rayonnement laser se propage dans le guide d'onde optique non-linéaire. De cette façon, une efficacité du mélange à quatre ondes qui se produit dans le guide d'onde optique non-linéaire entre le signal optique de source et le rayonnement laser peut être accrue.

Dans divers modes de mise en oeuvre de l'invention, l'une au moins des caractéristiques supplémentaires suivantes peut être utilisée avantageusement, indépendamment les unes des autres ou en combinaison :

- le rayonnement laser peut être continu ;

- la fréquence du rayonnement laser peut être supérieure à une borne supérieure de fréquence de l'intervalle spectral de source ;

- l'intervalle spectral de source peut être compris entre 185 THz (térahertz) et 200 THz, notamment entre 186 THz et 196 THz ;

- la fréquence du rayonnement laser peut être comprise entre 210 THz et 250 THz, notamment entre 229 THz et 233 THz ; et

- l'intervalle spectral utile peut être compris entre 30 THz et 165 THz, notamment entre 139 THz et 163 THz.

Un second aspect de l'invention propose un dispositif de transfert spectral qui est adapté pour mettre en oeuvre un procédé de transfert spectral conforme au premier aspect de l'invention, et qui comprend :

- un guide d'onde optique non-linéaire ;

- un assemblage d'entrée optique, agencé pour injecter dans le guide d'onde optique non-linéaire au moins un signal optique de source et un rayonnement laser ; et

- un assemblage de sortie optique, agencé pour collecter un signal optique qui est issu du guide d'onde optique non-linéaire, et qui comprend le signal optique utile tel que résultant du mélange à quatre ondes produit entre le signal optique de source et le rayonnement laser par l'instabilité de modulation stimulée.

Afin que le dispositif de transfert spectral soit adapté pour mettre en oeuvre le procédé du premier aspect de l'invention, le guide d'onde optique non-linéaire est adapté pour produire une instabilité de modulation qui est effective pour le signal optique de source lorsque ce signal optique de source se propage dans le guide d'onde optique non-linéaire. Dans ces conditions, l'instabilité de modulation produit un mélange à quatre ondes à partir du signal optique de source et du rayonnement laser, et dont résulte le signal optique utile. Une telle adaptation du guide d'onde optique non-linéaire peut être effectuée notamment par un choix approprié d'au moins un matériau et/ou des dimensions de ce guide d'onde. En outre, l'instabilité de modulation résulte de l'interaction entre l'effet Kerr et au moins un effet de dispersion, des paramètres du guide d'onde optique non-linéaire étant sélectionnés de sorte que le coefficient du terme de dérivation d'ordre 4 par rapport au temps, qui existe dans l'équation de propagation du guide d'onde optique non-linéaire, cette équation de propagation étant effective pour l'enveloppe du signal optique de source, soit négatif, et de sorte que le coefficient du terme de dérivation d'ordre 2 par rapport au temps, qui existe aussi dans l'équation de propagation du guide d'onde optique non-linéaire effective pour l'enveloppe du signal optique de source, soit aussi négatif.

Dans des modes préférés de réalisation d'un tel dispositif de transfert spectral, les assemblages d'entrée optique et de sortie optique peuvent en outre être adaptés pour injecter simultanément dans le guide d'onde optique non-linéaire un premier signal optique de source qui possède un spectre en forme de peigne, et un second signal optique de source qui possède un autre spectre en forme de peigne, et pour collecter simultanément un premier signal optique utile qui est produit par le procédé de transfert spectral à partir du premier signal optique de source, et un second signal optique utile qui est aussi produit par le même procédé de transfert spectral mais à partir du second signal optique de source. Pour cela, le rayonnement laser stimule l'instabilité de modulation à la fois pour le premier signal optique de source, afin de produire le premier signal optique utile, et pour le second signal optique de source, afin de produire le second signal optique utile. Grâce à un tel agencement où le guide d'onde optique non-linéaire est commun aux deux signaux optiques utiles, une cohérence temporelle qui existerait initialement entre les deux signaux optiques de source peut être conférée aux deux signaux optiques utiles, si bien que ces derniers peuvent présenter entre eux une cohérence temporelle qui est élevée.

Dans des modes de réalisation encore plus préférés, les assemblages d'entrée optique et de sortie optique peuvent être adaptés en outre pour injecter dans le guide d'onde optique non-linéaire le premier signal optique de source à une première extrémité du guide d'onde optique non-linéaire, et pour collecter le premier signal optique utile issu du guide d'onde optique non-linéaire à une seconde extrémité de celui-ci qui est opposée à sa première extrémité. Ces assemblages d'entrée optique et de sortie optique peuvent être adaptés en plus pour injecter le second signal optique de source dans le guide d'onde optique non-linéaire, simultanément au premier signal optique de source mais à la seconde extrémité du guide d'onde optique non-linéaire, et pour collecter le second signal optique utile qui est issu du guide d'onde optique non-linéaire à la première extrémité du guide d'onde optique non-linéaire. Un tel agencement des assemblages d'entrée optique et de sortie optique peut être facile à mettre en oeuvre, notamment en utilisant des circulateurs optiques et/ou des multiplexeurs.

Enfin, un troisième aspect de l'invention propose un spectrophotomètre à deux peignes qui comprend :

- un ensemble de source optique, adapté pour fournir deux signaux optiques de source, dits premier et second signaux optiques de source, qui possèdent chacun un spectre de source en forme de peigne dans un intervalle spectral de source commun, avec un pas fréquentiel de peigne du premier signal optique de source qui est différent d'un pas fréquentiel de peigne du second signal optique de source, les deux pas fréquentiels étant inférieurs chacun à un dixième d'une longueur de l'intervalle spectral de source exprimé en valeurs de fréquence, l'ensemble de source optique étant adapté en outre pour garantir une cohérence de phase entre les premier et second signaux optiques de source qui sont fournis ;

- un dispositif de transfert spectral qui est conforme aux modes préférés de réalisation du second aspect de l'invention, et qui est agencé pour que l'ensemble de source optique fournisse les premier et second signaux optiques de source à l'assemblage d'entrée optique du dispositif de transfert spectral ;

- un ensemble de couplage, agencé pour recevoir simultanément à partir de l'assemblage de sortie optique du dispositif de transfert spectral le premier signal optique utile qui est produit par ce dispositif de transfert spectral à partir du premier signal optique de source, et le second signal optique utile qui est aussi produit par le dispositif de transfert spectral mais à partir du second signal optique de source, et l'ensemble de couplage étant adapté pour envoyer simultanément dans un système à analyser les premier et second signaux optiques utiles, et pour collecter des parties émergentes des premier et second signaux optiques utiles après que ces signaux optiques utiles ont traversé le système à analyser selon un trajet optique dans ce système, ce trajet optique étant identique pour les premier et second signaux optiques utiles ;

- une cellule photo-électrique, disposée en aval du système à analyser par rapport à la propagation des signaux optiques utiles, pour détecter un éclairement d'interférence qui résulte d'une superposition des parties émergentes des premier et second signaux optiques utiles ; et

- un ensemble d'acquisition et d'analyse spectrale, qui est connecté à une sortie électrique de la cellule photo-électrique, et qui est adapté pour enregistrer des variations temporelles de l'éclairement d'interférence, et pour déduire des caractéristiques d'absorption du système à analyser à partir des variations temporelles de l'éclairement d'interférence.

Grâce au fait que les deux pas fréquentiels des peignes soient choisis pour être inférieurs chacun à un dixième de la longueur de l'intervalle spectral de source exprimé en valeurs de fréquence, les caractéristiques d'absorption du système à analyser, qui sont déduites par l'ensemble d'acquisition et d'analyse spectrale, peuvent avoir une résolution spectrale qui est élevée. Toutefois, en fonction de l'application prévue pour le spectrophotomètre, la limite supérieure d'un dixième pour les pas fréquentiels des deux signaux optiques de source par rapport à la longueur de l'intervalle spectral de source, peut être réduite.

En particulier, les caractéristiques d'absorption du système à analyser, qui sont déduites des variations temporelles de l'éclairement d'interférence, peuvent constituer un spectre d'absorption du système à analyser.

D'autres particularités et avantages de la présente invention apparaîtront dans la description ci-après d'exemples de mise en oeuvre non limitatifs, en référence aux dessins annexés, dans lesquels :

- la figure 1 est un diagramme spectral qui illustre une utilisation d'un effet d'instabilité de modulation, telle que connue de l'art antérieur ;

- la figure 2 correspond à la figure 1, pour une nouvelle utilisation de l'effet d'instabilité de modulation, telle que proposée par la présente invention ;

- la figure 3 est un schéma synoptique d'un dispositif de transfert spectral conforme à l'invention ; et

- la figure 4 est un schéma synoptique d'un spectrophotomètre conforme à l'invention.

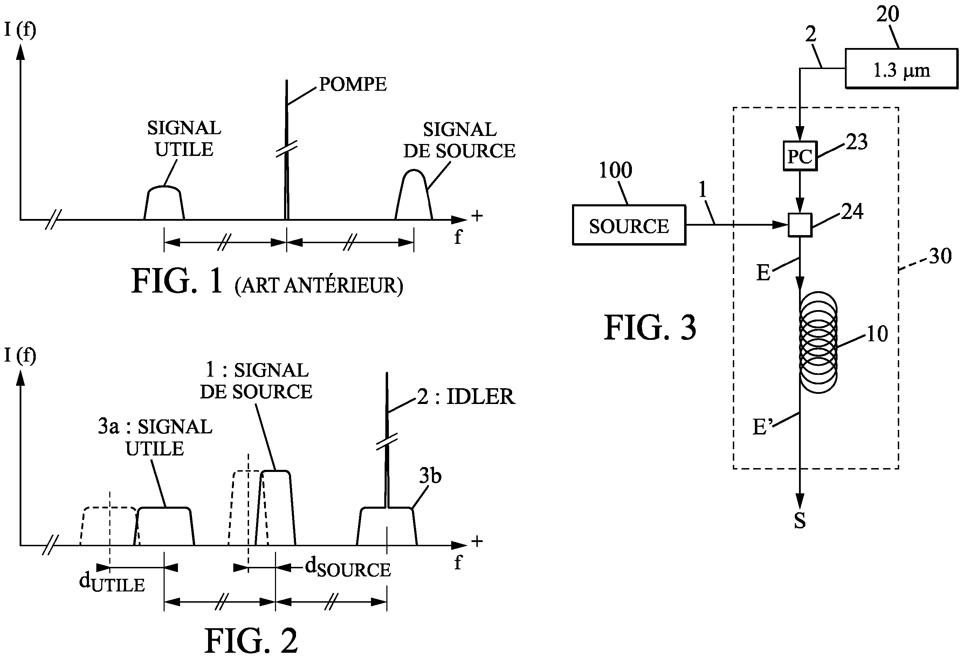

Pour raison de clarté, les écarts et distances qui apparaissent dans les diagrammes des figures 1 et 2 ne correspondent à aucune échelle, sauf indication contraire. En outre, des références identiques qui sont indiquées dans plusieurs figures désignent des éléments identiques ou qui ont des fonctions identiques.

De façon connue, l'équation de propagation de l'enveloppe d'une onde optique dans un guide d'onde non-linéaire est :

$$i\partial_z \psi + \gamma |\psi|^2 \psi + i\frac{\alpha}{2}\psi + \sum_{n=2}^{\infty} i^n \frac{\beta_n}{n!} \partial_t^n \psi = 0$$

Cette équation est connue sous l'appellation «non-linear Schrödinger equation», dans laquelle :

$\psi$ est l'enveloppe de l'onde optique, qui est supposée composée d'impulsions de rayonnement électromagnétique dans la suite,
$|\psi|^2$ est l'intensité de l'onde optique,
$i$ est l'unité imaginaire des nombres complexes,
$z$ est une coordonnée longitudinale du guide d'onde optique non-linéaire,
$\gamma$ est un coefficient d'effet Kerr non-linéaire qui affecte l'onde optique,
$\alpha$ est un coefficient d'amortissement linéaire qui affecte l'onde optique,
$t$ désigne la variable du temps, et
$\beta_n$ est un paramètre de dispersion chromatique d'ordre n du guide d'onde optique non-linéaire, défini tel que $i^n \cdot \beta_n/n$ ! soit le coefficient du terme de dérivation d'ordre n par rapport au temps, dans l'équation de propagation.

L'instabilité de modulation qui est utilisée dans l'invention résulte de préférence d'une combinaison entre l'effet Kerr non-linéaire et les termes de dérivation d'ordre 2 (n=2) et d'ordre 4 (n=4) par rapport au temps qui sont présents dans l'équation précédente : $-\frac{\beta_2}{2}\partial_t^2\psi$ (pour n=2) et $\frac{\beta_4}{24}\partial_t^4\psi$ (pour n=4). Toutefois, des composantes de signal optique utile qui résulteraient seulement du terme de dérivation d'ordre 2 seraient moins distantes spectralement du signal de pompe que des composantes du signal optique utile qui résultent à la fois du terme de dérivation d'ordre 2 et de celui d'ordre 4. C'est pourquoi le guide d'onde optique non-linéaire est sélectionné de sorte que son paramètre $\beta_4$ soit négatif, et que simultanément son paramètre $\beta_2$ soit positif. Ainsi, les coefficients des termes de dérivation d'ordres 2 et 4 par rapport au temps, dans l'équation de propagation rappelée ci-dessus, ont tous les deux des coefficients négatifs. De tels signes assurent notamment que le terme de dérivation d'ordre 2 par rapport au temps ne génère pas par lui-même une instabilité de modulation supplémentaire. Par exemple, la fibre optique HNL-DSF pour «highly-non-linear dispersion-shifted fiber» (HNDS1600ABA-6-5-5) de Sumitomo Electrics® possède les paramètres suivants : $\beta_2$ = 1.93.10$^{-4}$ ps$^2$/m (picoseconde au carré par mètre), $\beta_4$ = -4·10$^{-8}$ ps$^4$/m et $\gamma$ = 0,02 1/W/m (par watt et par mètre) à la longueur d'onde de 1 ,5686 $\mu$m. Un autre exemple de fibre optique pouvant former le guide d'onde optique non-linéaire qui est utilisé dans l'invention est la fibre HNLF OFS de Furukawa®.

Le mélange à quatre ondes tel qu'il résulte de l'instabilité de modulation due à l'équation de propagation précédente, satisfait la relation suivante, dite relation de conservation d'énergie à quatre ondes : $2 \cdot f_{POMPE} = f_{SOURCE} + f_{UTILE}$, où $f_{SOURCE}$ est la fréquence d'une composante spectrale d'un signal optique de source qui se propage dans le guide optique non-linéaire, $f_{POMPE}$ est une fréquence d'un rayonnement de pompe, c'est-à-dire d'un rayonnement optique qui fournit l'énergie nécessaire au développement de l'instabilité de modulation à partir du rayonnement optique de source, et $f_{UTILE}$ est la fréquence d'une composante spectrale d'un signal optique utile qui est générée à partir de la composante spectrale du signal optique de source qui possède la fréquence $f_{SOURCE}$. La relation précédente de conservation d'énergie implique que les fréquences $f_{SOURCE}$ et $f_{UTILE}$ sont situées symétriquement de part et d'autre de la fréquence $f_{POMPE}$ sur un axe de repérage des fréquences optiques. Autrement dit, elles respectent l'un des deux classements suivants : $f_{UTILE} < f_{POMPE} < f_{SOURCE}$ ou $f_{SOURCE} < f_{POMPE} < f_{UTILE}$.

Dans les conditions citées précédemment, i.e. le paramètre $\beta_2$ qui est positif et le paramètre $\beta_4$ qui est négatif, l'écart entre les fréquences $f_{UTILE}$ et $f_{POMPE}$, qui est opposé à l'écart entre $f_{SOURCE}$ et $f_{POMPE}$, est donné par une relation d'accord de phase qui exprime une conservation d'impulsion du rayonnement lors du mélange à quatre ondes. Cette relation d'accord de phase est :

$$4\pi^2 \cdot (f_{UTILE} - f_{POMPE})^2 = 4\pi^2 \cdot (f_{SOURCE} - f_{POMPE})^2 = \frac{-2}{\beta_4}\sqrt{9\beta_2{}^2 - 6\beta_4\gamma|\psi|^2} - 6\frac{\beta_2}{\beta_4}.$$

Selon une façon de mettre en oeuvre le mélange à quatre ondes, qui est connue de l'art antérieur pour produire un signal optique utile à partir du signal optique de source, un rayonnement laser est utilisé en tant que rayonnement de pompe, de sorte que le signal optique de source et le signal optique utile aient des fréquences qui sont situées symétriquement de chaque côté de la fréquence du rayonnement laser, sur l'axe des fréquences optiques. Le diagramme de la figure 1 illustre une telle configuration spectrale, f désignant l'axe de repérage des fréquences optiques, et I(f) étant une coordonnée d'intensité spectrale.

Selon une nouvelle façon de mettre en oeuvre le mélange à quatre ondes, qui est proposée par l'invention pour produire le signal optique utile à partir du signal optique de source, le signal optique de source est utilisé en tant que rayonnement de pompe, et un rayonnement laser dont la fréquence optique est décalée par rapport à celle du signal optique de source conformément à la relation d'accord de phase, est utilisé pour stimuler le mélange à quatre ondes. Dans une telle mise en oeuvre, le rayonnement laser peut être dit «IDLER». Alors, les fréquences du rayonnement laser, du signal optique de source et du signal optique utile satisfont l'un des deux nouveaux classements suivants : $f_{UTILE} < f_{SOURCE} < f_{IDLER}$ ou $f_{IDLER} < f_{SOURCE} < f_{UTILE}$, où $f_{IDLER}$ est la fréquence du rayonnement laser IDLER. Le diagramme de la figure 2 correspond au premier cas. Dans les deux cas, la fréquence $f_{UTILE}$ d'une composante du signal optique utile qui est ainsi générée à partir d'une composante du signal optique de source, est située à une position symétrique sur l'axe des fréquences optiques, de la fréquence $f_{IDLER}$ par rapport à la fréquence $f_{SOURCE}$ de la composante du signal optique de source. Alors, si la fréquence $f_{IDLER}$ reste constante et si la fréquence $f_{SOURCE}$ est décalée d'un écart fréquentiel $D_{SOURCE}$, la fréquence $f_{UTILE}$ est décalée d'un écart fréquentiel $D_{UTILE}$ qui est le double de $D_{SOURCE}$.

Selon une caractéristique supplémentaire de l'invention, en plus du fait d'utiliser le signal optique de source comme rayonnement de pompe dans le mélange à quatre ondes, le signal optique de source possède un spectre en forme de peigne à l'intérieur d'un intervalle spectral limité, dit intervalle spectral de source. Le signal optique de source apparaît alors dans une observation temporelle comme une série d'impulsions séparées, avec des retards entre impulsions successives qui sont constants. Dans toute la présente description, on appelle «pas fréquentiel» d'un spectre en forme de peigne l'écart de fréquence entre deux pics successifs du spectre, qui est égal à la fréquence de répétition des impulsions dans l'observation temporelle du signal. Alors, le signal optique utile possède aussi un spectre en forme de peigne, mais à l'intérieur d'un autre intervalle spectral limité, dit intervalle spectral utile. Dans le diagramme de la figure 2, les formes presque rectangulaires des contours d'intensité spectrale du signal optique de source, référencé 1, et du signal optique utile, référencé 3a, correspondent à de tels peignes fréquentiels qui ne sont pas résolus. Le pas fréquentiel du peigne du signal optique utile est identique à celui du signal optique de source. Mais, lorsque le rayonnement de stimulation, référencé 2 et noté IDLER, est monochromatique et lorsqu'aucune coupure de bande de transmission du guide d'onde n'intervient, le peigne du signal optique utile possède deux fois plus de pics fréquentiels que le signal optique de source. Pour cette raison, le signal optique utile possède une largeur spectrale, en termes de fréquence optique, qui est égale au double de celle du signal optique de source. Enfin, le mélange à quatre ondes produit simultanément une image 3b du spectre du signal optique utile 3a, à une position qui est symétrique de celle de ce spectre du signal optique utile 3a par rapport au spectre du signal optique de source 1. Cette image spectrale est alors superposée au rayonnement laser de stimulation 2.

Une limitation appropriée de la largeur spectrale du signal optique de source 1, par rapport à l'écart fréquentiel moyen qui existe entre ce signal optique de source 1 et le rayonnement laser IDLER 2, assure d'une façon qui est évidente pour l'Homme du métier que les signaux optiques de source 1 et utile 2 n'aient pas de recouvrement spectral entre eux.

La figure 3 montre un dispositif de transfert spectral 30 qui permet de produire un signal optique utile conformément au diagramme de la figure 2. Le dispositif 30 comprend un multiplexeur optique par division de longueur d'onde 24, une fibre optique non-linéaire 10, une sortie optique S, et optionnellement un variateur de polarisation 23, noté PC pour «polarization controller» en anglais. Par exemple, la fibre optique non-linéaire 10, qui constitue le guide d'onde optique non-linéaire, peut être la fibre HNL-DSF produite par Sumitomo Electrics® et déjà mentionnée plus haut. Sa longueur peut être de 5 m (mètre) environ, à titre d'exemple. Le multiplexeur 24 constitue l'assemblage d'entrée optique du dispositif 30, tel que mentionné dans la partie générale de la présente description. Il est connecté optiquement en sortie à une première extrémité E de la fibre optique non-linéaire 10. L'autre extrémité, notée E', de la fibre optique non-linéaire 10 peut être connectée optiquement à un assemblage de sortie optique (non représenté sur la figure 3). Cet assemblage de sortie optique est adapté pour collecter le signal optique utile 3a qui est généré dans la fibre optique non-linéaire 10, et le transmettre par la sortie optique S du dispositif 30.

Le multiplexeur 24 possède deux entrées distinctes. L'une de ses entrées est adaptée pour être connectée optiquement à une source 100 du signal optique de source 1, et son autre entrée est adaptée pour être connectée à une sortie d'une source laser 20, qui est destinée à produire le rayonnement laser IDLER 2. Le signal optique de source 1 et le rayonnement laser IDLER 2 sont injectés simultanément dans la fibre optique non-linéaire 10 par le multiplexeur 24. Afin de favoriser le mélange à quatre ondes dans la fibre optique non-linéaire 10, le variateur de polarisation 23 peut être ajusté pour modifier la polarisation du rayonnement laser IDLER 2 de façon à ce que cette polarisation soit sensiblement identique à celle du signal optique de source 1. Un tel ajustement peut être effectué empiriquement, pour maximiser l'intensité du signal optique utile 3a qui est transmis à la sortie optique S.

Par exemple, le peigne fréquentiel du signal optique de source 1 peut avoir une extension spectrale qui est comprise entre 186 THz environ et 196 THz environ, cet intervalle ayant été désigné par intervalle spectral de source dans la partie générale de la présente description. Il correspond à des longueurs d'onde qui sont comprises entre 1,53 $\mu$m environ et 1,61 $\mu$m environ pour une propagation en champ libre. Le rayonnement laser IDLER 2 peut être continu et avoir une fréquence d'environ 230,8 THz, correspondant à une longueur d'onde d'environ 1,3 $\mu$m pour une propagation en champ libre. Dans ces conditions, le peigne du signal optique utile 3a possède une extension spectrale qui est comprise entre 139 THz environ et 163 THz environ. Cet intervalle a été désigné par intervalle spectral utile dans la partie générale de la présente description et correspond alors à des longueurs d'onde qui sont comprises entre 1,84 $\mu$m environ et 2,16 $\mu$m environ pour une propagation en champ libre.

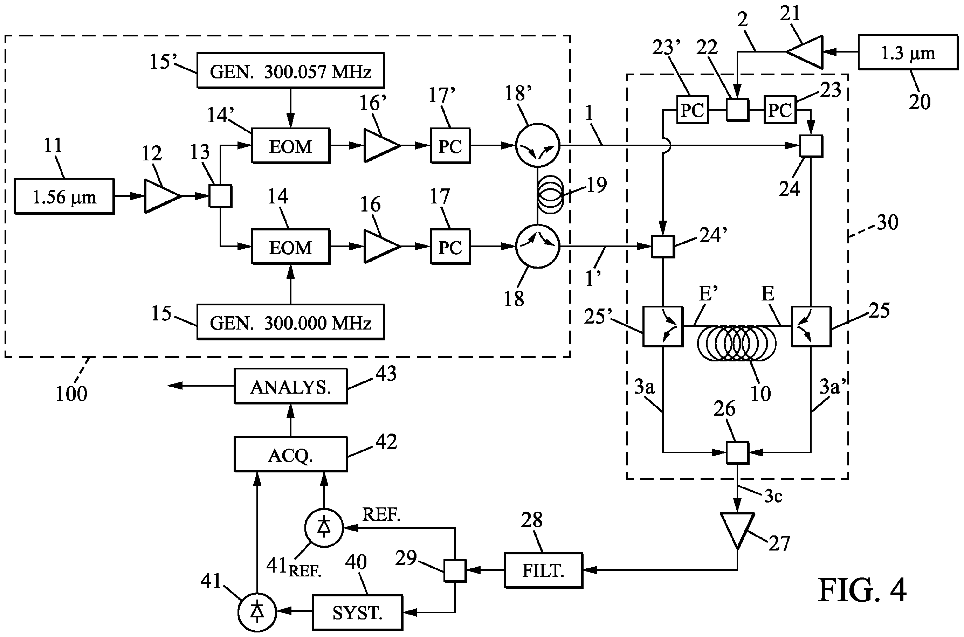

La figure 4 illustre une utilisation avantageuse du dispositif de transfert spectral 30 au sein d'un spectrophotomètre à deux peignes. La source 100 est remplacée par un ensemble de source optique capable de produire un signal optique de source composite dont le spectre est constitué par deux peignes qui ont des pas fréquentiels différents. Ces deux peignes sont référencés 1 et 1', et ont été appelés premier signal optique de source et second signal optique de source, respectivement, dans la partie générale de la présente description.

Un mode de réalisation possible pour l'ensemble de source optique 100 est maintenant décrit brièvement. Une source laser 11, par exemple d'un modèle utilisé en télécommunication avec une longueur d'onde d'environ 1,56 $\mu$m, peut produire un faisceau laser continu, dit faisceau initial. Ce faisceau initial peut être amplifié par l'amplificateur optique 12, puis divisé en deux parties d'intensités respectives qui sont sensiblement égales par un multiplexeur optique par division de longueur d'onde 13, utilisé en tant que diviseur de faisceau. Une première de ces deux parties du faisceau initial est dirigée dans une première voie de synthèse de peigne, pour former le peigne 1. L'autre partie du faisceau initial est dirigée simultanément dans une seconde voie de synthèse de peigne pour former le peigne 1'.

La première voie de synthèse comprend un modulateur électro-optique 14, noté EOM pour «electro-optical modulator» en anglais, qui est contrôlé par un générateur d'impulsions électriques 15. La première partie du faisceau initial qui est modulée ainsi peut être amplifiée par un amplificateur optique 16, puis ajustée en polarisation par un variateur de polarisation 17, et introduite dans un circulateur optique 18.

La seconde voie de synthèse comprend de la même façon un autre modulateur électro-optique référencé 14', qui est contrôlé par un autre générateur d'impulsions électriques référencé 15'. La seconde partie du faisceau initial qui est modulée ainsi peut être amplifiée par un autre amplificateur optique 16', ajustée en polarisation par un autre variateur de polarisation 17', et introduite dans un autre circulateur optique 18'.

Les deux générateurs d'impulsions électriques 15 et 15' sont paramétrés pour produire des impulsions à des fréquences de répétition d'impulsions qui sont légèrement différentes, par exemple 300,000 MHz (mégahertz) pour le générateur 15 et 300.057 MHz pour le générateur 15'. Une valeur de durée unitaire d'impulsion est de préférence commune aux deux générateurs 15 et 15', par exemple égale à 50 ps (picoseconde).

Les amplificateurs optiques 12, 16 et 16' peuvent être du type EDFA, pour «erbium-doped fiber amplifier» en anglais, qui est adapté pour une transmission optique dans l'intervalle de longueur d'onde 1,5 $\mu$m - 1,7 $\mu$m.

Dans le mode de réalisation qui est décrit ici, des ports intermédiaires des deux circulateurs optique 18 et 18' sont reliés chacun à une extrémité différente d'une fibre optique 19. La fibre 19 est sélectionnée pour produire un étalement spectral des deux parties de faisceau modulées, issues de la première voie de synthèse et de la seconde voie de synthèse, respectivement. Une telle méthode d'étalement spectral de deux peignes est décrite notamment dans l'article intitulé «Frequency-agile dual-comb spectrometry», de G. Millot et al., Nature Photonics. Ainsi, une sortie du circulateur optique 18' transmet un signal optique étalé spectralement qui résulte de la partie de faisceau modulée par la première voie de synthèse, et qui est le peigne 1. Symétriquement, une sortie du circulateur optique 18 transmet un autre signal optique étalé spectralement qui résulte de la partie de faisceau modulée par la seconde voie de synthèse, et qui est le peigne 1'.

Pour le mode de réalisation particulier du spectrophotomètre qui est décrit ici, l'assemblage d'entrée optique du dispositif de transfert spectral 30 est constitué par trois multiplexeurs 22, 24 et 24'. Une première entrée du multiplexeur 24 est dédiée pour recevoir le peigne 1, et une première entrée du multiplexeur 24' est dédiée pour recevoir le peigne 1'. Des secondes entrées respectives de chacun des multiplexeurs 24 et 24' sont connectées optiquement à la sortie optique de la source laser 20, par l'intermédiaire du multiplexeur 22 qui est utilisé en tant que diviseur de faisceau. La source laser 20 peut encore produire le rayonnement laser IDLER 2 sous forme d'un rayonnement continu monochromatique dont la longueur d'onde est d'environ 1,3 $\mu$m. Possiblement, un amplificateur optique 21 peut être utilisé pour amplifier le rayonnement laser IDLER 2 en amont du multiplexeur 22. Dans des modes de réalisation améliorés du spectrophotomètre, un variateur de polarisation 23 peut être disposé entre les multiplexeurs 22 et 24, et un autre 23' entre les multiplexeurs 22 et 24', pour ajuster séparément les polarisations des deux parties du rayonnement laser IDLER 2 qui sont dirigées à travers les multiplexeurs 24 et 24'. De cette façon, les interactions entre chacun des peignes 1, 1' et le rayonnement laser IDLER 2 au sein de la fibre optique non-linéaire 10 peuvent être maximisées. Toutefois, d'autres modes de réalisation du spectrophotomètre peuvent être dépourvus des variateurs de polarisation 23 et 23', notamment lorsque des fibres et composants optiques à maintien de polarisation sont utilisés. Le multiplexeur 22 est utilisé pour diviser le rayonnement laser IDLER 2 préférentiellement selon le rapport d'intensité 50%-50%. Ainsi, le multiplexeur 24 transmet en sortie le peigne 1 en superposition avec une moitié du rayonnement laser IDLER 2, et le multiplexeur 24' transmet en sortie de façon similaire le peigne 1' en superposition avec l'autre moitié du rayonnement laser IDLER 2.

Les deux extrémités E et E' de la fibre optique non-linéaire 10 sont connectées optiquement à deux multiplexeurs 25 et 25' utilisés pour faire fonction de circulateurs optiques : un port intermédiaire du multiplexeur 25 est connecté optiquement à l'extrémité E de la fibre 10, et un port intermédiaire du multiplexeur 25' est connecté optiquement à l'extrémité E' de cette fibre 10. Une entrée du multiplexeur 25 est connectée à la sortie du multiplexeur 24, et une entrée du multiplexeur 25' est connectée à la sortie du multiplexeur 24'. Ainsi, l'extrémité E' de la fibre optique non-linéaire 10 transmet à un multiplexeur 26, via le multiplexeur 25', un premier signal optique utile 3a en forme de peigne, qui résulte d'un premier mélange à quatre ondes entre le peigne 1 et l'une des moitiés du rayonnement laser IDLER 2. Simultanément, l'extrémité E de la fibre optique non-linéaire 10 transmet au multiplexeur 26, via le multiplexeur 25, un second signal optique utile 3a', aussi en forme de peigne, mais qui résulte d'un second mélange à quatre ondes entre le peigne 1' et l'autre moitié du rayonnement laser IDLER 2. Les peignes des signaux optiques utiles 3a et 3a' ont des pas fréquentiels différents, tels que résultant séparément des deux mélanges à quatre ondes. Les signaux optiques utiles 3a et 3a' sont alors superposés par le multiplexeur 26 qui constitue l'assemblage de sortie optique du dispositif de transfert optique 30, pour former un signal optique utile composite 3c. Une telle utilisation de la même fibre optique non-linéaire 10 pour produire simultanément les deux signaux optiques utiles 3a et 3a' assure que la cohérence temporelle qui existait entre les peignes 1 et 1', tels que produits par l'ensemble de source optique 100, est transférée aux deux signaux optiques utiles 3a et 3a', l'un par rapport à l'autre.

Le signal optique utile composite 3c est alors transmis pour partie à travers un système à analyser, noté SYST., et pour partie à une voie de référence, notée REF. Le système à analyser peut être un gaz qui est contenu dans une cuve 40, notamment une cuve à réflexions multiples. Un tel conteneur du système à analyser peut avoir d'autres formes de réalisation, par exemple la forme d'une fibre creuse à remplir avec le système à analyser. Il a été désigné de façon générale par ensemble de couplage dans la partie générale de la présente description. Pour cela, le signal optique utile composite 3c peut être divisé par un multiplexeur 29, par exemple dans des proportions de 90% environ à travers le système à analyser et 10% environ vers la voie de référence. Un amplificateur optique 27, par exemple du type TDFA pour «thulium-doped fiber amplifier» en anglais, ainsi qu'un filtre 28, noté FILT., peuvent être utilisés pour le signal optique utile composite 3c entre les multiplexeurs 26 et 29. L'amplificateur optique 27 du type TDFA est adapté pour une transmission optique dans l'intervalle de longueur d'onde 1,8 $\mu$m - 2,2 $\mu$m, et le filtre 28 peut être sélectionné en particulier pour supprimer des composantes de rayonnement d'émissions spontanées qui se produisent dans l'amplificateur optique 27. La partie du faisceau optique utile composite 3c qui traverse le système à analyser, formant le faisceau de mesure spectrophotométrique, est détectée par une cellule photo-électrique 41, et l'autre partie du faisceau optique utile composite 3c, qui passe par la voie de référence, est détectée séparément par une autre cellule photo-électrique $41_{REF}$. Les cellules photo-électriques 41 et $41_{REF}$ peuvent être des photodiodes ultra-rapides à base d'alliage InGaAs (indium-gallium-arsenic), par exemple.

Tout ou partie de la section optique du spectrophotomètre, y compris l'ensemble de source optique 100, le dispositif de transfert spectral 30 et la partie de mesure qui est comprise entre l'assemblage de sortie optique du dispositif 30 et les cellules photo-électriques 41 et $41_{REF}$, est réalisée de préférence avec les liaisons optiques par fibres optiques. Pour chaque liaison optique, la fibre optique qui est utilisée est sélectionnée en fonction de sa bande passante par rapport aux signaux optiques et/ou rayonnements qui doivent être transmis par cette liaison optique.

Les signaux électriques de détection qui sont produits par les deux cellules photo-électriques 41 et $41_{REF}$ sont échantillonnés temporellement et numérisés par l'unité d'acquisition 42, notée ACQ., puis soustraits l'un à l'autre en appliquant éventuellement une correction d'échelle à l'un au moins d'entre eux. Enfin, une unité d'analyse 43, notée ANALYS., peut appliquer une transformation de Fourier par rapport au temps au signal qui est issu de l'unité d'acquisition 42. Le résultat de cette transformation est un spectre d'absorption du système à analyser. Selon le principe connu de la spectrophotométrie à deux peignes, le spectre d'absorption est à affecter aux valeurs de fréquence optique des pics fréquentiels qui sont voisins par paires dans le signal optique utile composite 3c.

Un avantage particulier de l'utilisation du dispositif de transfert spectral 30 conforme à l'invention au sein du spectrophotomètre à deux peignes réside dans l'efficacité d'un décalage de la longueur d'onde de la source laser 11 pour obtenir un intervalle spectral total de mesure spectrophotométrique qui est large. En effet, des valeurs différentes pour la longueur d'onde d'émission laser de la source 11 peuvent être successivement adoptées, pour acquérir des segments du spectre total de mesure, à raison d'un segment de spectre pour chaque valeur de la longueur d'onde d'émission laser de la source 11. Le spectre total est alors obtenu par raboutage des segments de spectre. Grâce à l'utilisation du rayonnement de la source laser 20 en tant que rayonnement laser IDLER, selon l'invention, le nombre des segments de spectre à acquérir successivement, c'est-à-dire le nombre des valeurs à adopter successivement pour la longueur d'onde de la source laser 11, peut être réduit d'un facteur deux, ou sensiblement égal à deux, par rapport à une configuration de transfert spectral qui serait conforme à la figure 1. La durée totale d'analyse spectrophotométrique est réduite en conséquence.

Alternativement, il est aussi possible de varier la longueur d'onde d'émission laser de la source 20 pour acquérir successivement des segments de spectre qui sont décalés le long de l'axe de fréquence optique, à raison d'un segment de spectre pour chaque valeur de la longueur d'onde d'émission laser de la source 20. Un avantage de cette autre méthode de décalage réside dans le fait que les valeurs numériques relatives à l'instabilité de modulation qui est utilisée selon l'invention, notamment les valeurs des paramètres $\beta_2$ et $\beta_4$, sont identiques entre les segments de spectre qui sont obtenus.

Il est entendu que l'invention peut être reproduite en modifiant des aspects secondaires du mode de mise en oeuvre qui a été décrit en détail ci-dessus, mais tout en conservant certains au moins des avantages cités.

En particulier, lorsque deux signaux optiques de source, chacun ayant un spectre en forme de peigne, sont introduits simultanément dans un guide d'onde optique non-linéaire, il n'est pas indispensable qu'ils se propagent à l'intérieur de celui-ci selon des sens de propagation opposés. Dans d'autres modes de mise en oeuvre qui sont aussi possibles, les deux signaux optiques utiles peuvent être introduits dans un guide d'onde optique non-linéaire à une même extrémité de celui-ci afin qu'ils se propagent dans le guide d'onde optique non-linéaire selon un même sens de propagation, qui est alors aussi commun avec le rayonnement laser IDLER. Dans ce cas, les deux signaux optiques de source ont préférablement des polarisations qui sont orthogonales, pour éviter qu'ils interagissent l'un avec l'autre lors de leurs propagations simultanées dans le guide d'onde optique non-linéaire.

En outre, les paramètres du guide d'onde optique non-linéaire peuvent être sélectionnés alternativement pour utiliser l'instabilité de modulation d'ordre 2 qui résulte de l'interaction entre l'effet Kerr et les effets de dispersion, au lieu de l'ordre 4. Toutefois, le décalage spectral qui est obtenu de cette façon pour le signal utile par rapport au signal de source est plus faible.

Par ailleurs, les valeurs numériques qui ont été citées ne l'ont été qu'à titre d'illustration, mais sans but de limitation. Ces valeurs numériques peuvent être modifiées autant que nécessaire en fonction de l'application pour laquelle le procédé de transfert spectral de l'invention est mis en oeuvre. De façon générale, de telles applications ne sont pas limitées à la réalisation de spectrophotomètres.

**Revendications**

1. Procédé de transfert spectral pour produire un signal optique utile (3a) qui possède un spectre en forme de peigne dans un intervalle spectral utile, à partir d'un signal optique de source (1) qui possède un spectre de source aussi en forme de peigne mais dans un autre intervalle spectral, dit intervalle spectral de source et qui ne possède pas de recouvrement avec l'intervalle spectral utile,

   comprenant d'injecter simultanément dans un guide d'onde optique non-linéaire (10) le signal optique de source (1) et un rayonnement laser (2), et de recueillir à une sortie du guide d'onde optique non-linéaire le signal optique utile (3a) tel que résultant d'un mélange à quatre ondes qui se produit entre le signal optique de source et le rayonnement laser lors de propagations simultanées dudit signal optique de source et dudit rayonnement laser dans ledit guide d'onde optique non-linéaire,
   **caractérisé en ce qu'**une fréquence du rayonnement laser (2) est sélectionnée telle que l'intervalle spectral de source soit intermédiaire entre la fréquence du rayonnement laser et l'intervalle spectral utile, lorsque l'intervalle spectral de source et l'intervalle spectral utile sont exprimés en valeurs de fréquence, de sorte que le signal optique de source (1) a une fonction de source d'énergie pour une instabilité de modulation qui est effective pour ledit signal optique de source lors de la propagation dudit signal optique de source dans le guide d'onde optique non-linéaire (10), ladite instabilité de modulation résultant d'une interaction entre un effet Kerr et au moins un effet de dispersion, des paramètres du guide d'onde optique non-linéaire étant sélectionnés de sorte qu'un coefficient d'un terme de dérivation d'ordre 4 par rapport au temps, qui existe dans une équation de propagation du guide d'onde optique non-linéaire, ladite équation de propagation étant effective pour une enveloppe du signal optique de source, soit négatif, et de sorte qu'un coefficient d'un terme de dérivation d'ordre 2 par rapport au temps, qui existe aussi dans ladite équation de propagation du guide d'onde optique non-linéaire effective pour l'enveloppe du signal optique de source, soit aussi négatif,
   et **en ce que** la fréquence du rayonnement laser (2) est aussi sélectionnée telle que ledit rayonnement laser stimule ladite instabilité de modulation effective pour le signal optique de source (1), et le signal optique utile (3a) résultant du mélange à quatre ondes produit par l'instabilité de modulation stimulée.

2. Procédé selon la revendication 1, suivant lequel les paramètres du guide d'onde optique non-linéaire (10) sont sélectionnés en outre en fonction d'un écart voulu entre l'intervalle spectral utile et l'intervalle spectral de source.

3. Procédé selon l'une quelconque des revendications précédentes, suivant lequel au moins un variateur de polarisation (23) est disposé pour ajuster l'une par rapport à l'autre des polarisations respectives du signal optique de source (1) et du rayonnement laser (2), avant que ledit signal optique de source ou ledit rayonnement laser se propage dans le guide d'onde optique non-linéaire (10), afin d'accroître une efficacité du mélange à quatre ondes qui se produit entre ledit signal optique de source et ledit rayonnement laser.

4. Procédé selon l'une quelconque des revendications précédentes, suivant lequel le rayonnement laser (2) est continu.

5. Procédé selon l'une quelconque des revendications précédentes, suivant lequel la fréquence du rayonnement laser (2) est supérieure à une borne supérieure de fréquence de l'intervalle spectral de source.

6. Procédé selon l'une quelconque des revendications précédentes, suivant lequel

   l'intervalle spectral de source est compris entre 185 THz et 200 THz, notamment entre 186 THz et 196 THz, la fréquence du rayonnement laser (2) est comprise entre 210 THz et 250 THz, notamment entre 229 THz et 233 THz, et
   l'intervalle spectral utile est compris entre 30 THz et 165 THz, notamment entre 139 THz et 163 THz.

7. Dispositif de transfert spectral (30), comprenant :

   - un guide d'onde optique non-linéaire (10) ;
   - un assemblage d'entrée optique, agencé pour injecter dans le guide d'onde optique non-linéaire (10) au moins un signal optique de source (1) et un rayonnement laser (2) ; et
   - un assemblage de sortie optique, agencé pour collecter au moins un signal optique qui est issu du guide d'onde optique non-linéaire (10),
   dans lequel le guide d'onde optique non-linéaire est adapté pour produire une instabilité de modulation qui est effective pour le signal optique de source lorsque ledit signal optique de source se propage dans ledit guide d'onde optique non-linéaire, de sorte que l'instabilité de modulation produise un mélange à quatre ondes à partir du signal optique de source et du rayonnement laser, et dont résulte un signal optique utile,

ladite instabilité de modulation résultant d'une interaction entre un effet Kerr et au moins un effet de dispersion, des paramètres du guide d'onde optique non-linéaire (10) étant sélectionnés de sorte qu'un coefficient d'un terme de dérivation d'ordre 4 par rapport au temps, qui existe dans une équation de propagation du guide d'onde optique non-linéaire, ladite équation de propagation étant effective pour une enveloppe du signal optique de source, soit négatif, et de sorte qu'un coefficient d'un terme de dérivation d'ordre 2 par rapport au temps, qui existe aussi dans ladite équation de propagation du guide d'onde optique non-linéaire effective pour l'enveloppe du signal optique de source, soit aussi négatif,

le dispositif de transfert spectral (30) étant ainsi adapté pour mettre en oeuvre un procédé de transfert spectral qui est conforme à l'une quelconque des revendications 1 à 6, et le signal optique qui est collecté par l'assemblage de sortie optique comprenant le signal optique utile (3a) tel que résultant du mélange à quatre ondes produit entre le signal optique de source (1) et le rayonnement laser (2) par l'instabilité de modulation stimulée.

8. Dispositif selon la revendication 7, dans lequel les assemblages d'entrée optique et de sortie optique sont en outre adaptés pour injecter simultanément dans le guide d'onde optique non-linéaire (10) un premier signal optique de source (1) qui possède un spectre en forme de peigne, et un second signal optique de source (1') qui possède un autre spectre en forme de peigne, et pour collecter simultanément un premier signal optique utile (3a) qui est produit par le procédé de transfert spectral à partir du premier signal optique de source, et un second signal optique utile (3a') qui est produit par ledit procédé de transfert spectral mais à partir du second signal optique de source,

le rayonnement laser (2) stimulant l'instabilité de modulation à la fois pour le premier signal optique de source (1), afin de produire le premier signal optique utile (3a), et pour le second signal optique de source (1'), afin de produire le second signal optique utile (3a').

9. Dispositif selon la revendication 8, dans lequel les assemblages d'entrée optique et de sortie optique sont adaptés en outre pour injecter dans le guide d'onde optique non-linéaire (10) le premier signal optique de source (1) à une première extrémité (E) dudit guide d'onde optique non-linéaire, et pour collecter le premier signal optique utile (3a) issu du guide d'onde optique non-linéaire à une seconde extrémité (E') dudit guide d'onde optique non-linéaire opposée à ladite première extrémité, et pour injecter simultanément dans ledit guide d'onde optique non-linéaire le second signal optique de source (1') à la seconde extrémité du guide d'onde optique non-linéaire, et pour collecter le second signal optique utile (3a') issu du guide d'onde optique non-linéaire à la première extrémité dudit guide d'onde optique non-linéaire.

10. Spectrophotomètre à deux peignes comprenant :

- un ensemble de source optique (100), adapté pour fournir deux signaux optiques de source, dits premier (1) et second (1') signaux optiques de source, qui possèdent chacun un spectre de source en forme de peigne dans un intervalle spectral de source commun, avec un pas fréquentiel de peigne du premier signal optique de source qui est différent d'un pas fréquentiel de peigne du second signal optique de source, les deux pas fréquentiels étant inférieurs chacun à un dixième d'une longueur de l'intervalle spectral de source exprimé en valeurs de fréquence, l'ensemble de source optique étant adapté en outre pour garantir une cohérence de phase entre les premier et second signaux optiques de source qui sont fournis ;

- un dispositif de transfert spectral (30) qui est conforme à la revendication 8 ou 9, et qui est agencé pour que l'ensemble de source optique (100) fournisse les premier (3a) et second (3a') signaux optiques de source à l'assemblage d'entrée optique dudit dispositif de transfert spectral ;

- un ensemble de couplage (40), agencé pour recevoir simultanément à partir de l'assemblage de sortie optique du dispositif de transfert spectral (30) le premier signal optique utile (3a) qui est produit par ledit dispositif de transfert spectral à partir du premier signal optique de source (1), et le second signal optique utile (3a') qui est produit par ledit dispositif de transfert spectral à partir du second signal optique de source (1'), et l'ensemble de couplage étant adapté pour envoyer simultanément dans un système à analyser lesdits premier et second signaux optiques utiles, et pour collecter des parties émergentes des premier et second signaux optiques utiles après que lesdits signaux optiques utiles ont traversé le système à analyser selon un trajet optique dans ledit système à analyser, ledit trajet optique étant identique pour lesdits premier et second signaux optiques utiles ;

- une cellule photo-électrique (41), disposée en aval du système à analyser par rapport à la propagation des signaux optiques utiles, pour détecter un éclairement d'interférence qui résulte d'une superposition des parties émergentes des premier (3a) et second (3a') signaux optiques utiles ; et

- un ensemble d'acquisition et d'analyse spectrale (42, 43), connecté à une sortie électrique de la cellule photo-électrique (41), et adapté pour enregistrer des variations temporelles de l'éclairement d'interférence, et pour déduire des caractéristiques d'absorption du système à analyser à partir desdites variations temporelles de l'éclairement d'interférence.

**Patentansprüche**

1. Spektralübertragungsverfahren zum Erzeugen eines optischen Nutzsignals (3a), das ein kammförmiges Spektrum in einem Nutzspektralbereich aufweist, aus einem optischen Quellensignal (1), das ein Quellenspektrum aufweist, das ebenfalls kammförmig ist, aber in einem anderen Spektralbereich, dem sogenannten Quellenspektralbereich, liegt und das keine Überlappung mit dem Nutzspektralbereich besitzt,

   umfassend das gleichzeitige Einspeisen des optischen Quellensignals (1) und einer Laserstrahlung (2) in einen nichtlinearen optischen Wellenleiter (10) und das Auffangen des optischen Nutzsignals (3a) an einem Ausgang des nichtlinearen optischen Wellenleiters, wie es sich aus einer Vierwellenmischung ergibt, die zwischen dem optischen Quellensignal und der Laserstrahlung bei gleichzeitigen Ausbreitungen des optischen Quellensignals und der Laserstrahlung in dem nichtlinearen optischen Wellenleiter auftritt,
   **dadurch gekennzeichnet, dass** eine Frequenz der Laserstrahlung (2) derart gewählt wird, dass der Quellenspektralbereich zwischen der Frequenz der Laserstrahlung und dem Nutzspektralbereich liegt, wenn der Quellenspektralbereich und der Nutzspektralbereich in Frequenzwerten ausgedrückt werden, so dass das optische Quellensignal (1) eine Energiequellenfunktion für eine Modulationsinstabilität hat, die für das optische Quellensignal bei der Ausbreitung des optischen Quellensignals in dem nichtlinearen optischen Wellenleiter (10) wirksam ist, wobei die Modulationsinstabilität aus einer Interaktion zwischen einem Kerr-Effekt und wenigstens einem Dispersionseffekt resultiert, wobei Parameter des nichtlinearen Lichtwellenleiters derart gewählt werden, dass ein Koeffizient eines Ableitungsterms der 4. Ordnung nach der Zeit, der in einer Ausbreitungsgleichung des nichtlinearen Lichtwellenleiters existiert, wobei die Ausbreitungsgleichung für eine Einhüllende des optischen Quellensignals wirksam ist, negativ ist, und so, dass ein Koeffizient eines Ableitungsterms 2. Ordnung nach der Zeit, der ebenfalls in der Ausbreitungsgleichung des nichtlinearen Lichtwellenleiters existiert, die für die Einhüllende des optischen Quellensignals wirksam ist, ebenfalls negativ ist,
   und dass die Frequenz der Laserstrahlung (2) auch derart gewählt wird, dass die Laserstrahlung die effektive Modulationsinstabilität für das optische Quellensignal (1) und das optische Nutzsignal (3a), das aus der Vierwellenmischung resultiert, die durch die stimulierte Modulationsinstabilität erzeugt wird, stimuliert.

2. Verfahren nach Anspruch 1, bei dem die Parameter des nichtlinearen optischen Wellenleiters (10) ferner in Abhängigkeit von einer gewünschten Abweichung zwischen dem Nutzspektralbereich und dem Quellenspektralbereich gewählt werden.

3. Verfahren nach einem der vorhergehenden Ansprüche, bei dem wenigstens ein Polarisationsvariator (23) angeordnet ist, um die jeweiligen Polarisationen des optischen Quellensignals (1) und der Laserstrahlung (2) relativ zueinander einzustellen, bevor sich das optische Quellensignal oder die Laserstrahlung in dem nichtlinearen optischen Wellenleiter (10) ausbreitet, um eine Effizienz der Vierwellenmischung, die zwischen dem optischen Quellensignal und der Laserstrahlung auftritt, zu erhöhen.

4. Verfahren nach einem der vorhergehenden Ansprüche, bei dem die Laserstrahlung (2) kontinuierlich ist.

5. Verfahren nach einem der vorhergehenden Ansprüche, bei dem die Frequenz der Laserstrahlung (2) größer als eine obere Frequenzgrenze des Quellenspektralbereichs ist.

6. Verfahren nach einem der vorhergehenden Ansprüche, bei dem

   der Spektralbereich der Quelle zwischen 185 THz und 200 THz, insbesondere zwischen 186 THz und 196 THz, liegt,
   die Frequenz der Laserstrahlung (2) zwischen 210 THz und 250 THz, insbesondere zwischen 229 THz und 233 THz, liegt, und
   der nutzbare Spektralbereich zwischen 30 THz und 165 THz, insbesondere zwischen 139 THz und 163 THz, liegt.

7. Spektralübertragungsvorrichtung (30), umfassend:

   - einen nichtlinearen optischen Wellenleiter (10);

13

- eine optische Eingangsbaugruppe, die dazu angeordnet ist, in den nichtlinearen optischen Wellenleiter (10) wenigstens ein optisches Quellensignal (1) und eine Laserstrahlung (2) einzuspeisen; und

- eine optische Ausgangsbaugruppe, die dazu angeordnet ist, wenigstens ein optisches Signal zu erfassen, das aus dem nichtlinearen optischen Wellenleiter (10) stammt,

wobei der nichtlineare optische Wellenleiter dazu ausgebildet ist, eine Modulationsinstabilität zu erzeugen, die für das optische Quellensignal wirksam ist, wenn sich das optische Quellensignal in dem nichtlinearen optischen Wellenleiter ausbreitet, so dass die Modulationsinstabilität eine Vierwellenmischung aus dem optischen Quellensignal und der Laserstrahlung erzeugt, aus der ein optisches Nutzsignal resultiert,

wobei die Modulationsinstabilität aus einer Wechselwirkung zwischen einem Kerr-Effekt und wenigstens einem Dispersionseffekt resultiert, wobei Parameter des nichtlinearen optischen Wellenleiters (10) derart gewählt sind, dass ein Koeffizient eines Ableitungsterms der 4. Ordnung nach der Zeit, der in einer Ausbreitungsgleichung des nichtlinearen optischen Wellenleiters existiert, wobei die Ausbreitungsgleichung für eine Einhüllende des optischen Quellensignals wirksam ist, negativ ist, und so, dass ein Koeffizient eines Ableitungsterms der 2. Ordnung nach der Zeit, der auch in der Ausbreitungsgleichung des nichtlinearen optischen Wellenleiters, die für die Einhüllende des optischen Quellensignals wirksam ist, existiert, ebenfalls negativ ist,

wobei die Spektralübertragungsvorrichtung (30) dazu ausgebildet ist, ein Spektralübertragungsverfahren durchzuführen, das einem der Ansprüche 1 bis 6 entspricht, und das optische Signal, das von der optischen Ausgangsanordnung gesammelt wird, das optische Nutzsignal (3a) umfasst, wie es sich aus der Vierwellenmischung ergibt, die zwischen dem optischen Quellensignal (1) und der Laserstrahlung (2) durch die stimulierte Modulationsinstabilität erzeugt wird.

8. Vorrichtung nach Anspruch 7, wobei die Baugruppen für den optischen Eingang und den optischen Ausgang ferner dazu dazu ausgebildet sind, gleichzeitig in den nichtlinearen optischen Wellenleiter (10) ein erstes optisches Quellensignal (1), das ein kammförmiges Spektrum aufweist, und ein zweites optisches Quellensignal (1'), das ein anderes kammförmiges Spektrum aufweist, einzuspeisen, und zum gleichzeitigen Erfassen eines ersten optischen Nutzsignals (3a), das durch das Spektralübertragungsverfahren aus dem ersten optischen Quellensignal erzeugt wird, und eines zweiten optischen Nutzsignals (3a'), das durch das Spektralübertragungsverfahren, aber aus dem zweiten optischen Quellensignal erzeugt wird,

wobei die Laserstrahlung (2) die Modulationsinstabilität sowohl für das erste optische Quellensignal (1) stimuliert, um das erste optische Nutzsignal (3a) zu erzeugen, als auch für das zweite optische Quellensignal (1'), um das zweite optische Nutzsignal (3a') zu erzeugen.

9. Vorrichtung nach Anspruch 8, wobei die optischen Eingangs- und Ausgangsbaugruppen ferner dazu ausgebildet sind, in den nichtlinearen optischen Wellenleiter (10) das erste optische Quellensignal (1) an einem ersten Ende (E) des nichtlinearen optischen Wellenleiters einzuspeisen und das erste optische Nutzsignal (3a), das aus dem nichtlinearen optischen Wellenleiter stammt, an einem zweiten Ende (E') des nichtlinearen optischen Wellenleiters, das dem ersten Ende gegenüberliegt, zu erfassen, und um gleichzeitig in den nichtlinearen Lichtwellenleiter das zweite optische Quellensignal (1') am zweiten Ende des nichtlinearen Lichtwellenleiters einzuspeisen und um das zweite optische Nutzsignal (3a'), das aus dem nichtlinearen Lichtwellenleiter stammt, am ersten Ende des nichtlinearen Lichtwellenleiters zu erfassen.

10. Doppelkamm-Spektralphotometer, umfassend:

- eine optische Quellenanordnung (100), die dazu ausgebildet ist, zwei optische Quellensignale, genannt erstes (1) und zweites (1') optische Quellensignal, bereitzustellen, die jeweils ein kammförmiges Quellenspektrum in einem gemeinsamen Quellenspektralbereich aufweisen, wobei eine Kammfrequenzteilung des ersten optischen Quellensignals von einer Kammfrequenzteilung des zweiten optischen Quellensignals verschieden ist, wobei die beiden Frequenzschritte jeweils kleiner sind als ein Zehntel einer Länge des Quellenspektralbereichs, ausgedrückt in Frequenzwerten, wobei die optische Quellenanordnung ferner dazu ausgebildet ist, eine Phasenkohärenz zwischen dem ersten und dem zweiten bereitgestellten optischen Quellensignal zu gewährleisten;

- eine Spektralübertragungsvorrichtung (30), gemäß Anspruch 8 oder 9, die dazu angeordnet ist, dass die optische Quellenanordnung (100) das erste (3a) und das zweite (3a') optische Quellensignal an die optische Eingangsbaugruppe der Spektralübertragungsvorrichtung liefert;

- eine Kopplungsanordnung (40), die dazu angeordnet ist, von der optischen Ausgangsbaugruppe der Spektralübertragungsvorrichtung (30) gleichzeitig das erste optische Nutzsignal (3a), das von der Spektralübertragungsvorrichtung aus dem ersten optischen Quellensignal (1) erzeugt wird, und das zweite optische Nutzsignal (3a'), das von der Spektralübertragungsvorrichtung aus dem zweiten optischen Quellensignal (1') erzeugt wird, zu empfangen, und wobei die Kopplungsanordnung dazu asugebildet ist, das erste und das zweite optische Nutzsignal gleichzeitig in ein zu analysierendes System zu senden, und um emergente Teile der ersten und zweiten optischen Nutzsignale zu erfassen, nachdem die optischen Nutzsignale das zu analysierende System entlang eines optischen Pfades in dem zu analysierenden System durchlaufen haben, wobei der optische Pfad für die ersten und zweiten optischen Nutzsignale identisch ist,

- eine Fotozelle (41), die in Bezug auf die Ausbreitung der optischen Nutzsignale stromabwärts des zu analysierenden Systems angeordnet ist, um eine Interferenzbeleuchtung zu erfassen, die aus einer Überlagerung der emergenten Teile des ersten (3a) und des zweiten (3a') optischen Nutzsignals resultiert; und

- eine spektrale Erfassungs- und Analyseanordnung (42, 43), die mit einem elektrischen Ausgang der Fotozelle (41) verbunden und derart ausgebildet ist, dass sie zeitliche Änderungen der Interferenzbeleuchtungsstärke aufzeichnet und aus den zeitlichen Änderungen der Interferenzbeleuchtungsstärke Absorptionseigenschaften des zu analysierenden Systems ableitet.

## Claims

1. A spectral transfer method for producing a useful optical signal (3a) that has a spectrum in comb shape in a useful spectral interval, from a source optical signal (1) that has a source spectrum also in comb shape but in another spectral interval, referred to as the source spectrum interval, and which does not have any overlap with the useful spectral interval,

   comprising simultaneously injecting the source optical signal (1) and a laser radiation (2) into a non-linear optical waveguide (10), and collecting, at an output of the non-linear optical waveguide, the useful optical signal (3a) as resulting from a four-wave mixture that is produced between the source optical signal and the laser radiation during simultaneous propagations of said source optical signal and of said laser radiation in said non-linear optical waveguide,

   **characterised in that** a frequency of the laser radiation (2) is selected such that the source spectral interval is intermediate between the frequency of the laser radiation and the useful spectral interval, when the source spectral interval and the useful spectral interval are expressed in frequency values, so that the source optical signal (1) has an energy source function for a modulation instability that is effective for said source optical signal during the propagation of said source optical signal in the non-linear optical waveguide (10), said modulation instability resulting from an interaction between a Kerr effect and at least one dispersion effect, parameters of the non-linear optical waveguide being selected so that a coefficient of a fourth-order derivative term with respect to time, which exists in a propagation equation of the non-linear optical waveguide, said propagation equation being effective for an envelope of the source optical signal, is negative, and so that a coefficient of a second-order derivative term with respect to time, which also exists in said propagation equation of the non-linear optical waveguide effective for the envelope of the source optical signal, is also negative, and **in that** the frequency of the laser radiation (2) is also selected such that said laser radiation stimulates said modulation instability effective for the source optical signal (1), and the useful optical signal (3a) resulting from the fourth-wave mixture produced by the stimulated modulation instability.

2. The method according to claim 1, wherein the parameters of the non-linear optical waveguide (10) are furthermore selected according to a desired gap between the useful spectral interval and the source spectral interval.

3. The method according to any one of the preceding claims, wherein at least one polarisation variator (23) is disposed for adjusting with respect to each other respective polarisations of the source optical signal (1) and of the laser radiation (2), before said source optical signal or said laser radiation propagates in the non-linear optical waveguide (10), in order to increase an efficiency of the four-wave mixture that is produced between said source optical signal and said laser radiation.

4. The method according to any one of the preceding claims, wherein the laser radiation (2) is continuous.

5. The method according to any one of the preceding claims, wherein the frequency of the laser radiation (2) is higher than an upper frequency bound of the source spectral interval.

6. The method according to any one of the preceding claims, wherein

   the source spectral interval is between 185 THz and 200 THz, in particular between 186 THz and 196 THz, the frequency of the laser radiation (2) is between 210 THz and 250 THz, in particular between 229 THz and 233 THz, and
the useful spectral interval is between 30 THz and 165 THz, in particular between 139 THz and 163 THz,

7. A spectral transfer device (30) comprising:

- a non-linear optical waveguide (10);
- an optical input assembly, arranged to inject into the non-linear optical waveguide (10) at least one source optical signal (1) and a laser radiation (2); and
- an optical output assembly, arranged to collect at least one optical signal that originates from the non-linear optical waveguide (10),
wherein the non-linear optical waveguide is adapted to produce a modulation instability that is effective for the source optical signal when said source optical signal propagates in said non-linear optical waveguide, so that the modulation instability produces a four-wave mixture from the source optical signal and from the laser radiation, and from which useful optical signal results,
said modulation instability resulting from an interaction between a Kerr effect and at least one dispersion effect, parameters of the non-linear optical waveguide (10) being selected so that a coefficient of a fourth-order derivative term with respect to time, which exists in a propagation equation of the non-linear optical waveguide, said propagation equation being effective for an envelope of the source optical signal, is negative, and so that a coefficient of a second-order derivative term with respect to time, which also exists in said propagation equation of the non-linear optical waveguide effective for the envelope of the source optical signal, is also negative, the spectral transfer device (30) being thus adapted to implement a spectral transfer method that is in accordance with any one of claims 1 to 6, and the optical signal that is collected by the optical output assembly comprising the useful optical signal (3a) as resulting from the four-wave mixture produced between the source optical signal (1) and the laser radiation (2) by the stimulated modulation instability.

8. The device according to claim 7, wherein the optical input and optical output assemblies are furthermore adapted to simultaneously inject into the non-linear optical waveguide (10) a first source optical signal (1) that has a spectrum in comb shape, and a second source optical signal (1') that has another spectrum in comb shape, and to simultaneously collect a first useful optical signal (3a) that is produced by the spectral transfer method from the first source optical signal, and a second useful optical signal (3a') that is produced by said spectral transfer method but from the second source optical signal,
the laser radiation (2) stimulating the modulation instability both for the first source optical signal (1) in order to produce the first useful optical signal (3a), and for the second source optical signal (1') in order to produce the second useful optical signal (3a').

9. The device according to claim 8, wherein the optical input and optical output assemblies are furthermore adapted to inject into the non-linear optical waveguide (10) the first source optical signal (1) at a first end (E) of said non-linear optical waveguide, and to collect the first useful optical signal (3a) originating from the non-linear optical waveguide at a second end (E') of said non-linear optical waveguide opposite to said first end, and to simultaneously inject into said non-linear optical waveguide the second source optical signal (1') at the second end of the non-linear optical waveguide, and to collect the second useful optical signal (3a') originating from the non-linear optical waveguide at the first end of said non-linear optical waveguide.

10. A two-comb spectrophotometer comprising:

- an optical source assembly (100) adapted to supply two source optical signals, referred to as first (1) and second (1') source optical signals, and that each have a source spectrum in comb shape in a common source spectral interval, with a comb frequency pitch of the first source optical signal that is different from a comb frequency pitch of the second source optical signal, both frequency pitches each being less than one tenth of a length of the source spectral interval expressed in frequency values, the optical source assembly being furthermore adapted to ensure phase coherence between the first and second source optical signals that are supplied;
- a spectral transfer device (30) that is in accordance with claim 8 or 9, and is arranged so that the optical source assembly (100) supplies the first (3a) and second (3a') source optical signals to the optical input assembly of said spectral transfer device;
- a coupling assembly (40) arranged to simultaneously receive from the optical output assembly of the spectral transfer device (30), the first useful optical signal (3a) that is produced by said spectral transfer device from the first source optical signal (1) and the second useful optical signal (3a') that is produced by said spectral transfer device from the second source optical signal (1'), and the coupling assembly being adapted to simultaneously send said first and second useful optical signals into a system to be analysed and to collect emerging parts of the first and second useful optical signals after said useful optical signals have passed through the system to be analysed along an optical path in said system to be analysed, said optical path being identical for said first and second useful optical signals;

- a photoelectric cell (41) disposed downstream of the system to be analysed with respect to the propagation of the useful optical signals, to detect an interference illumination that results from a superimposition of the emerging parts of the first (3a) and second (3a') useful optical signals; and

- an acquisition and spectral-analysis assembly (42, 43) connected to an electrical output of the photoelectric cell (41) and adapted to record time variations of the interference illumination, and to deduce absorption features of the system to be analysed from said time variations of the interference illumination.

I (f)

SIGNAL
UTILE

POMPE

SIGNAL
DE SOURCE

f

FIG. 1 (ART ANTÉRIEUR)

I (f)

1 : SIGNAL
DE SOURCE

3a : SIGNAL
UTILE

2 : IDLER

3b

$d_{UTILE}$

$d_{SOURCE}$

f

FIG. 2

100

SOURCE

1

20

1.3 µm

2

PC          23

24

E

30

10

E'

S

FIG. 3

EP 3 769 153 B1

FIG. 4

EP 3 769 153 B1

19

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20120133931 A1
- WO 2014102572 A1

**Littérature non-brevet citée dans la description**

- **DE SCHILLER S.** Spectrometry with frequency combs. *Optics Letters,* 2002, vol. 27, 766
- **DE GUY MILLOT et al.** Frequency-agile dual-comb spectroscopy. *Nature Photonics,* 2015, vol. 10, 27-30
- **DE ZHAOWEI ZHANG et al.** Mid-infrared dual-comb spectroscopy with an optical parametric oscillator. *Optics Letters,* 2013, vol. 38 (16), 3148-3150
- **DE S. SCHILLER.** Spectrometry with frequency combs. *Optics Letters,* 2002, vol. 27 (9), 766-768
- **DE J. FATOME et al.** Observation of Optical Undular Bores in Multiple Four-wave Mixing». *Physical Review X,* 2014, vol. 4 (2), 021022
- **DE G. MILLOT et al.** Frequency-agile dual-comb spectrometry». *Nature Photonics*